# EUROPEAN PATENT SPECIFICATION

(11) **EP 1 413 943 B1**
(45) Date of publication and mention of the grant of the patent: **12.12.2007**
(21) Application number: 03078245.2
(22) Date of filing: 14.10.2003
(51) Int. Cl.: G06F 1/18

(54) **Enclosure containing a server terminal which is also suitable for use in operating theatres**
Serverendgerät enthaltendes Gehäuse welches auch zur Verwendung in Operationssälen geeignet ist
Boîtier comprenant un terminal serveur utilisable dans des salles d'opération

(30) Priority: 25.10.2002 GB 0224867
(43) Date of publication of application: 28.04.2004
(73) Proprietor: Biomedical Industries Ltd, Waterfront Drive Tortola (VI)
(72) Inventor: Viale, Enrico, Torino (IT)
(74) Representative: Fiammenghi-Domenighetti, Delfina

(56) References cited:
- US-A- 5 021 763
- US-A- 5 247 428
- US-A- 5 783 771

## Description

This invention relates to the technological field of the physical components in a computer network designed for use with one or more interconnected servers.

More particularly, the invention concerns an enclosure suitable for containing all the component parts of a server terminal such as the corresponding hardware, a monitor or display screen and a keyboard, suitable and designed to enable such a terminal to be located in an environment where there is a high risk of bacteriological or biological contamination, such as an operating theatre or similar.

To this effect, as will be seen in more detail below, the enclosure in the invention consists of two half-shells facing each other forming a bay inside to take the hardware, screen, keyboard and other component parts.

These half-shells are made of a material that will screen off electromagnetic waves, such as titanium, with no recesses or projecting parts on the surfaces, but with a perfectly smooth surface in order to prevent the formation of incrustations that might contain bacteria.

To prevent the hardware housed in the enclosure in the invention from the effects of moisture, which is always present in an operating theatre, and which is known to itself be a vehicle for germs or bacteria, the inventor has envisaged covering it with one or more porous membranes superimposed on top of each other, enabling air to pass through but preventing the infiltration of moisture particles. This means that the hardware can be cooled by simple natural ventilation or else by forced ventilation by means of a ventilation system which takes air from the atmosphere via a filter and emits it in the half-shell housing the hardware, extracting it by overpressure via a series of vents made in the half-shell in question at least to enable air to circulate.

Using an enclosure constructed in accordance with the invention, it is possible to install a terminal even in an operating theatre connected to one or more servers, preferably equipped with the latest DVD-R technology, enabling storage of a substantial volume of data in the minimum possible space.

An enclosure as per the invention can of course also house other devices of various types enabling access by a user only subject to recognition of fingerprint, iris image, etc., thus ensuring the necessary degree of confidentiality for a computer network in an operating theatre.

The subject of this invention thus consists of an enclosure designed to house all the component parts of server terminal of a computer network, as described in the attached claim 1.

A more detailed description will now be given of a preferred example of construction of the enclosure as per the invention, with reference to the attached figures as well, which represent the following:
- Fig. 1 is a partially sectional schematic side view of the enclosure as per the invention, mounted at an angle on a support in relation to which it can slide vertically and / or rotate;
- Fig. 2 is a side view of the enclosure shown in Fig. 1, with the said enclosure in a vertical position;
- Fig. 3 is a front view of the enclosure shown in Fig. 2;
- Fig. 4 is a schematic illustration of possible positioning of an enclosure as per the invention in an operating theatre.

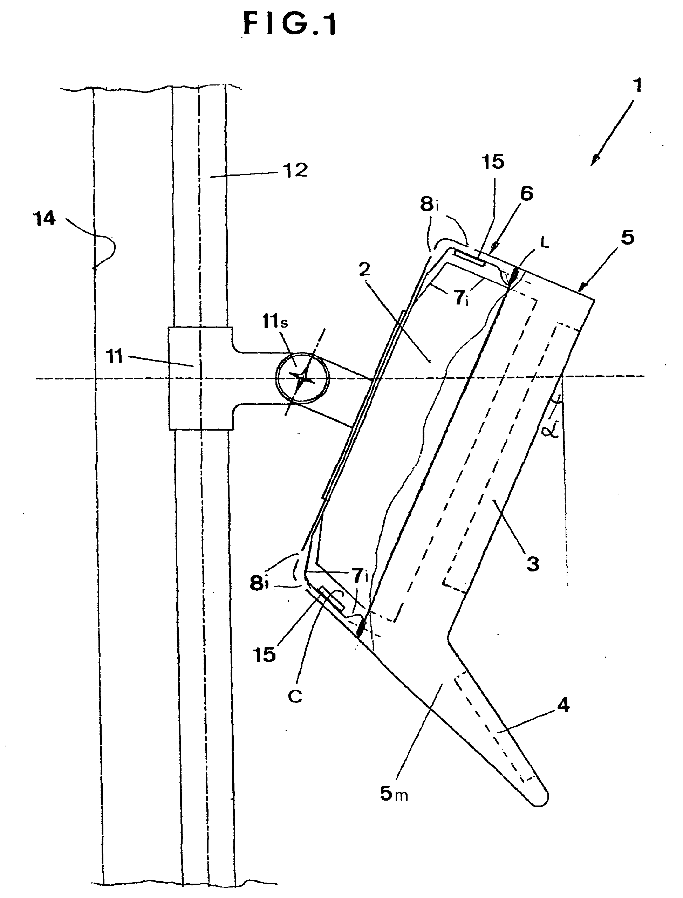

Looking first at Figures 1, 2 and 3, it will be noted how the enclosure 1 as per the invention is composed of two half-shells 5, 6, facing each other to form a cavity C, which houses the hardware 2, a display screen or monitor 3, and a keyboard 4.

This hardware is for the most part housed in the rear half-shell 6, but depending on the overall geometry of the assembly, this may also occupy part of the front half-shell 5, which houses the aforementioned screen 3 and keyboard 4. To optimise the ergonomics of the enclosure 1, the inventor proposed housing the keyboard 4 on an angled console 5 m, projecting outwards from under the screen 3, as shown in the figures.

As stated, to prevent the potential formation of scale on the external surfaces of the enclosure 1, the latter should be perfectly smooth, i.e. with no recesses or projections. This means it is possible to clean and disinfect these surfaces easily after a predetermined period of use (for example at the end of each operation if the enclosure 1 is installed in an operating theatre).

In order to avoid possible interference with operation of the hardware 2 caused by electromagnetic fields produced by medical or surgical equipment or instruments, the two half-shells 5, 6 are made of a material, such as titanium, to form a screen against electromagnetic waves.

As the air inside an operating theatre contains vapour which is potentially a vehicle for germs and bacteria, to prevent these entering via the vents 8i for ventilation that must be provided on at lest the rear shell 6 and forming deposits on the hardware components, stagnating and multiplying in the heat produced by these, the inventor proposes, as already mentioned, enclosing all the component parts of the said hardware 2 with one or more superimposed membranes 7i (for the sake of simplicity, only one is shown on the drawing) shaped to wrap the hardware 2 as required by means of supports 15 fixed to the rear half-shell 6. It is pointed out that, on the drawing, for clarity of representation, the membrane 7i has been drawn slightly detached from the walls of the rear half-shell 6, but it may also adhere to the latter.

This membrane or series of membranes 7i are interposed between the front shell 5 and the rear shell 6 along the entire joint line L, to prevent moisture and / or foreign matter from penetrating through them, acting as a hermetic seal. The said membranes 7i are made of a porous material, for example non-woven polyethylene micro-fibre, with pores of a size that will enable air to pass through but prevent the passage of both moisture and foreign matter more than 0.3 - 0.4 micron wide.

As a final measure, the inventor also proposes that the ventilation vents 8i described previously, made in the rear half-shell 6, are of a width (from 1 to 3 tenths of a mm) that will likewise prevent the penetration of moisture and foreign matter.

Naturally, to prevent such infiltration as described above in the core of the keyboard 3 as well, this is hermetically sealed in a film of flexible transparent plastic material of a known type. (This is not shown on the drawing as it is self-evident).

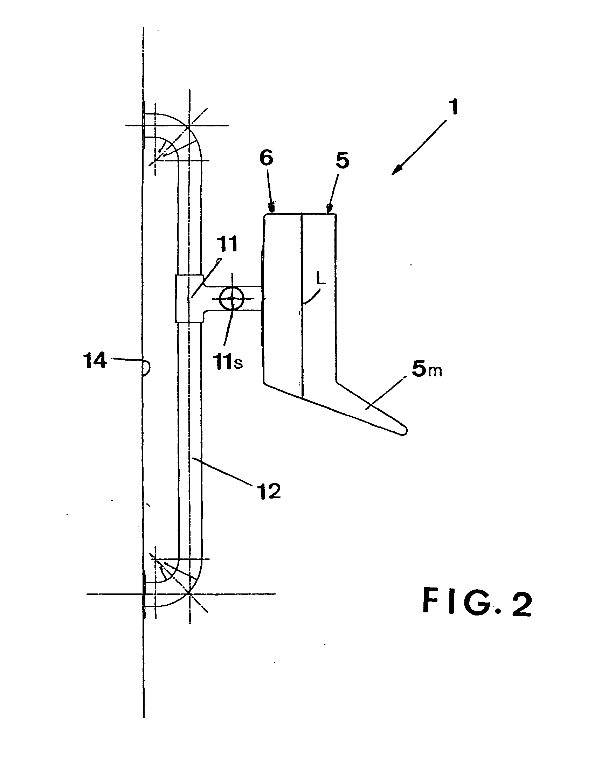

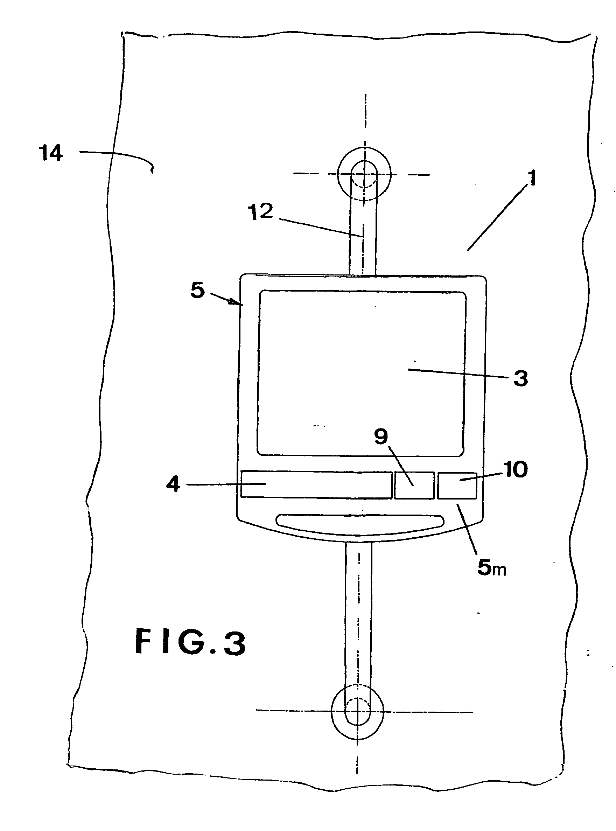

An enclosure 1 as per the invention can advantageously be fixed to a support 12, mounted on a wall 14 in the operating theatre, attaching it to this by a known method, with a friction bushing 11 equipped with a flexible articulated joint 11s such that the enclosure 1 can slide and / or rotate in relation to the said support 12, remaining fixed in the required position, for example inclined at an angle α to the vertical as shown in Fig. 1, or aligned with the vertical as shown in Figs. 2 and 3.

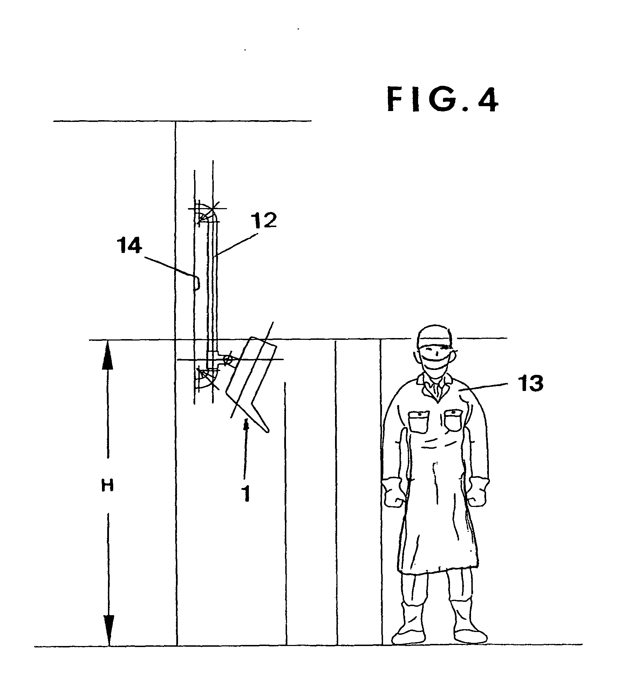

By installing the said support 12 as shown in Fig. 4, or with the possibility of moving the enclosure 1 until its top edge is at a height of 170 - 180 cm, this ensures the optimum ergonomic solution for a user 13 of average height.

An enclosure 1 as described may also house, for example next to the keyboard 3, other devices 9, 10 designed to detect the identity of a user by examining their fingerprints, iris image, etc., granting or refusing access to the server functions depending on the outcome of the abovementioned identification process.

If necessary, other types of device can also be housed in the enclosure 1, adjusting the dimensions and / or the geometry of the two half-shells 5, 6 accordingly.

By using an enclosure constructed in accordance with the invention, a server terminal can then even be located in an operating theatre, complying with all the applicable health and hygiene regulations and guaranteeing absolute confidentiality of information and data processed by the said server.

To complete this description, it is added that in the majority of cases, to ensure proper cooling of the hardware contained in the enclosure as per the invention, the natural ventilation generated by the upward motion of the air contained in the hardware itself and by its circulation through the said vents 8i and the pores in the membrane(s) 7i.

In particular cases, depending on the power used by the hardware, the enclosure in question may also house a compact forced ventilation system with a fan which takes air from the atmosphere via a filter of known type suitable for this type of application, and conveys it to the rear half-shell, forcing it out by overpressure through the pores in the membrane 7i as already described and the vents 8i provided in the enclosure 1.

This solution is not shown on the drawings.

## Claims

1. Enclosure (1) designed to house all the component parts of a server terminal of a computer network, including the hardware (2), a screen (3) and a keyboard (4), **characterised by** the fact that it consists of a front half-shell (5) and a rear half-shell (6) at least being perforated by several vents (8i) for ventilation, the front and rear half-shells set facing each other to form a cavity (C) containing the said hardware (2), the said screen (2) and the said keyboard (4), the said hardware (2) being enclosed on all the parts facing the walls of the perforated rear half-shell (6) by at least one porous membrane (7i) designed to enable air to pass through and to prevent the passage of moisture, the external surfaces of the enclosure (1) being of a totally smooth construction, with no recesses or projections, the said front half-shell (5) and rear half-shell (6) being made of a material providing screening against electromagnetic waves.

2. Enclosure as per claim 1 in which the said two front (5) and rear (6) half-shells are made of titanium.

3. Enclosure as per one of the preceding claims in which at least one membrane (7i) is made of non-woven polypropylene microfibre.

4. Enclosure as per one of the preceding claims in which the rear half-shell (6) is perforated with a series of vents (8i) of a width designed to prevent the infiltration of moisture via these.

5. Enclosure as per claim 4 in which the rear half-shell (6) is equipped with a forced ventilation system designed to take air from the outside atmosphere via a filter, then convey this to the said rear half-shell (6) and force it out through the said vents (8i).

6. Enclosure as per one of claims 4 or 5, in which the said vents (8i) are of a width of 1 to 3 tenths of a mm.

7. Enclosure as per one of the preceding claims in which the front shell (5) also contains a device (9) designed to detect and recognise the fingerprints of the user and grant or refuse the latter access to the server depending on the outcome of this identification process.

## Patentansprüche

1. Gehäuse (1), das so entworfen ist; dass es alle Bauelemente eines Server-Endgeräts eines Computernetzes aufnehmen kann, einschließlich der Hardware (2), eines Bildschirms (3) und einer Tastatur (4), **dadurch gekennzeichnet, dass** es aus einer vorderen Halbschale (5) und einer hinteren Halbschale (6), die zumindest durch mehrere Luftlöcher (8i) für die Belüftung perforiert ist, besteht, wobei die vordere und die hintere Halbschale einander zugewandt angeordnet sind, um einen Hohlraum (C) zu bilden, der die Hardware (2), den Bildschirm (3) und die Tastatur (4) enthält, wobei die Hardware (2) an allen Elementen, die den Wänden der perforierten hinteren Halbschale (6) zugewandt sind, durch wenigstens eine poröse Membran (7i) umschlossen ist, die so entworfen ist, dass sie Luft durchlässt und den Durchgang von Feuchtigkeit verhindert, wobei die äußeren Oberflächen des Gehäuses (1) vollkommen glatt, ohne Aussparungen oder Vorsprünge, konstruiert sind, wobei die vordere Halbschale (5) und die hintere Halbschale (6) aus einem Material hergestellt sind, das eine Abschirmung gegen elektromagnetische Wellen schafft.

2. Gehäuse nach Anspruch 1, wobei die vordere Halbschale (5) und die hintere Halbschale (6) jeweils aus Titan hergestellt sind.

3. Gehäuse nach den vorhergehenden Ansprüchen, wobei wenigstens eine Membran (7i) aus einer nicht gewebten Polypropylen-Mikrofaser hergestellt ist.

4. Gehäuse nach einem der vorhergehenden Ansprüche, wobei die hintere Halbschale (6) mit einer Reihe von Luftlöchern (8a) perforiert ist, deren Weite so entworfen ist, dass ein Eindringen von Feuchtigkeit durch sie verhindert wird.

5. Gehäuse nach Anspruch 4, wobei die hintere Halbschale (6) mit einem Zwangsbelüftungssystem ausgerüstet ist, das so entworfen ist, dass es Luft aus der äußeren Atmosphäre über einen Filter ansaugt, diese dann zu der hinteren Halbschale (6) befördert und sie durch die Luftlöcher (8i) hinausdrängt.

6. Gehäuse nach einem der Ansprüche 4 oder 5, wobei die Luftlöcher (8i) eine Weite von 1 bis 3 Zehntelmillimeter haben.

7. Gehäuse nach einem vorhergehenden Anspruch, wobei die vordere Schale (5) außerdem eine Vorrichtung (9) enthält, die so entworfen ist, dass sie Fingerabdrücke des Anwenders erfasst und erkennt und dem Letzteren in Abhängigkeit vom Ergebnis dieses Identifizierungsprozesses einen Zugang zu dem Server gewährt oder verweigert.

## Revendications

1. Boîtier (1) conçu pour loger toutes les parties constitutives d'un terminal serveur d'un réseau informatique, comprenant le matériel (2), un écran (3) et un clavier (4), **caractérisé en ce qu'**il se compose d'une moitié de coque avant (5) et d'une moitié de coque arrière (6) qui elle au moins est percée de plusieurs ouïes (8i) d'aération, les moitiés de coque avant et arrière étant disposées l'une en face de l'autre pour former une cavité (C) contenant ledit matériel (2), ledit écran (3) et ledit clavier (4), ledit matériel (2) étant entouré sur toutes ses parties tournées vers les parois de la moitié de coque arrière perforée (6) par au moins une membrane poreuse (7i) conçue pour laisser passer l'air et pour empêcher le passage de l'humidité, les surfaces extérieures du boîtier (1) ayant une structure totalement lisse, sans creux ni protubérances, et ladite moitié de coque avant (5) et ladite moitié de coque arrière (6) étant formées d'une matière assurant une protection contre les ondes électromagnétiques.

2. Boîtier selon la revendication 1, dans lequel lesdites deux moitiés de coque avant (5) et arrière (6) sont formées de titane.

3. Boîtier selon la revendication 1 ou 2, dans lequel au moins une membrane (7i) est formée de microfibres de polypropylène non tissé.

4. Boîtier selon l'une quelconque des revendications précédentes, dans lequel la moitié de coque arrière (6) est percée d'une série d'ouïes (8i) ayant une largeur conçue pour empêcher l'humidité de s'infiltrer à travers elles.

5. Boîtier selon la revendication 4, dans lequel la moitié de coque arrière (6) est équipée d'un système de ventilation forcée conçu pour admettre de l'air provenant de l'atmosphère extérieure à travers un filtre, puis pour l'acheminer jusqu'à ladite moitié de coque arrière (6) et pour l'obliger à sortir à travers lesdites ouïes (8i).

6. Boîtier selon la revendication 4 ou 5, dans lequel lesdites ouïes (8i) ont une largeur de 1 à 3 dixièmes de mm.

7. Boîtier selon l'une quelconque des revendications précédentes, dans lequel la coque avant (5) renferme également un dispositif (9) conçu pour détecter et reconnaître les empreintes digitales de l'utilisateur et pour accorder ou refuser à ce dernier un accès au serveur en fonction du résultat de ce processus d'identification.
